(19) Europäisches Patentamt
European Patent Office
Office européen des brevets

(11) Publication number: 0 170 371
A2

(12) # EUROPEAN PATENT APPLICATION

(21) Application number: 85304024.4

(22) Date of filing: 06.06.85

(51) Int. Cl.[4]: C 23 F 11/18
C 09 K 7/02

(30) Priority: 31.07.84 US 636436

(43) Date of publication of application: 05.02.86 Bulletin 86/6

(84) Designated Contracting States: AT CH DE FR GB LI NL SE

(71) Applicant: THE DOW CHEMICAL COMPANY
2030 Dow Center Abbott Road P.O. Box 1967
Midland, MI 48640(US)

(72) Inventor: Doty, Peter A.
1977 Poseyville Road
Midland Michigan 48640(US)

(72) Inventor: Larson, William A.
1409 Corrine
Midland Michigan 48640(US)

(74) Representative: Raynor, John et al,
W.H.Beck, Greener & Co 7 Stone Buildings Lincoln's Inn
London WC2A 3SZ(GB)

(54) **Corrosion inhibited brine composition, method of making same, and method of inhibiting corrosion and decreasing corrosiveness.**

(57) A corrosion-inhibiting composition including an aqueous solution of at least one alkali or alkaline earth metal halide and a corrosion-inhibiting amount of zinc and thiocyanate ions for use in well drilling, completion, packer fluid and workover operations.

EP 0 170 371 A2

# CORROSION INHIBITED BRINE COMPOSITION, METHOD OF MAKING SAME, AND METHOD OF INHIBITING CORROSION AND DECREASING CORROSIVENESS

This invention relates to corrosion--inhibiting compositions and more particularly to corrosion inhibitors for use in brines.

Brines, for example, those referred to as "clear brine fluids," such as aqueous solutions of alkali or alkaline earth metal halides including $CaCl_2$, $CaBr_2$, $MgCl_2$, and mixtures thereof, are used as drilling, completion, packer and workover fluids in oil and gas well operations. These brines are useful in providing a hydrostatic head especially in high-pressure wells which, typically, require fluids with densities of 8.5 pounds per gallon (ppg) (1020 kilograms per cubic metre ($kg/m^3$)) or above. The use of these brines has improved well drilling, completion, packer and workover operations by eliminating formation plugging problems and solid settling problems previously encountered when solids--containing media, such as water base and oil base drilling muds, were used.

In spite of the improvements provided by the use of clear brine fluids, clear brine fluids can be corrosive under operating conditions in drilling, completion, packer and workover operations. The corrosion problem is exacerbated by the higher temperatures typically found in deeper wells in which these brines are used.

The prior art teaches that various corrosion inhibitors can be added to brines in an effort to overcome the corrosive nature of brines. Known inhibitors include, for example, film-forming amine-based corrosion inhibitors such as described in US Patent No. 4,292,183.

Thiocyanate or thiourea compounds, alone, or in combination with a quaternary pyridinium, quinolium or isoquinolinium salts are used as corrosion inhibitors for aqueous brines, such as calcium chloride, calcium bromide, calcium iodide, zinc chloride, zinc bromide, zinc iodide, or a mixture of such salts, as disclosed in British Patent Application 2,027,686A.

Although the above corrosion inhibitors are sometimes satisfactory for providing corrosion-inhibiting properties to brines used, for example, as well drilling, completion, packer and workover medium, it is desired to provide a corrosion-inhibiting composition with an improved performance over the corrosion-inhibiting compositions above suitable for such use.

One aspect of the present invention is a corrosion-inhibiting composition comprising water,

at least one alkali or alkaline earth metal halide and a corrosion-inhibiting amount of zinc and thiocyanate ions.

Another aspect of the present invention is a method of making a corrosion-inhibited composition comprising combining water, at least one alkali or alkaline earth metal halide and a corrosion-inhibiting amount of zinc and thiocyanate ions.

Yet another aspect of the present invention is a method of inhibiting corrosion of metals comprising contacting a metal with an aqueous solution of at least one alkali or alkaline earth metal halide and a corrosion-inhibiting amount of zinc and thiocyanate ions.

The term "brine" as used herein means an aqueous solution containing at least one inorganic salt of an alkali or alkaline earth metal halide. Thus, the brines intended to be covered in the present invention are aqueous solutions of halides of alkali or alkaline earth metals and mixtures thereof. For example, the brines may include $CaCl_2$, $CaBr_2$, $MgCl_2$, $MgBr_2$ or mixtures thereof, and the like. In addition, alkali metal halides such as NaCl, NaBr, KCl, KBr, or mixtures thereof and the like, or seawater may be useful in the present invention. Any aqueous solution of the aforementioned salts at any density is useful in the present invention. Preferably, brines of the

present invention include all brines having a density of 8 ppg (950 $kg/m^3$) and above. More preferably, the density of the brine lies in the range from 8 ppg (950 $kg/m^3$) to 16 ppg (1900 $kg/m^3$). Even more preferably, the density of the brine may be in the range from 10 ppg (1200 $kg/m^3$) to 15 ppg (1800 $kg/m^3$).

The brines used according to the present invention will be referred to herein as "clear brine fluids" which are suitable for use as well drilling, completion, packer and workover fluids in the oil and gas industry and the corrosion inhibiting composition of the present invention will be described, herein, with reference to clear brine fluids used in oil and gas wells. However, the present invention is not to be limited to such use as the composition of the present invention can be used in other applications such as for the production of brines from subterranean formations or other applications where brine is used in contact with metal to inhibit the corrosive properties of the brine toward the metal. Metals which typically come into contact with the composition include ferrous metals such as iron and steel and alloys of such metals, with steel being the most common, as it is widely used in the oil and gas industry.

The corrosion-inhibiting composition of the present invention consists essentially of brine, i.e., water and at least one alkali or alkaline earth metal halide, as described above, and a corrosion-inhibiting amount of zinc and thiocyanate

ions therein. The corrosion-inhibiting composition of the present invention includes a corrosion-inhibiting amount of any compound or combination of compounds which dissociate in an aqueous solution or in a brine of the present invention to provide zinc cations ($Zn^{++}$) and thiocyanate anions ($SCN^-$). Herein, the compound or combination of compounds which provide the $Zn^{++}$ and $SCN^-$ ions in solution will be referred to as a "corrosion inhibitor." For example, zinc thiocyanate ($Zn(SCN)_2$) is a preferred corrosion inhibitor compound since it, alone, provides both a $Zn^{++}$ and a $SCN^-$ ion when it is dissolved in solution. In addition, mixtures of zinc compounds and thiocyanate compounds or thiourea compounds may be used as the corrosion inhibitor to provide the $Zn^{++}$ and $SCN^-$ in a brine or aqueous solution. For example, the zinc compounds, which may be water-soluble or brine-soluble, may include halides of zinc such as zinc bromide ($ZnBr_2$) or zinc chloride ($ZnCl_2$) or mixtures thereof. Other zinc compounds, which ionize in a brine or aqueous solution to produce zinc ions, may be utilized such as zinc formate, zinc hydroxide, or zinc acetate. The preferred zinc compound when used in combination with a thiocyanate compound is a zinc halide such as $ZnCl_2$ or $ZnBr_2$.

The thiocyanate compounds useful in the present invention are of the type represented by the general formula:

$$X\text{-}SCN$$

where X is any inorganic or organic cation.

The preferred thiocyanate compounds used are those which are water-soluble or brine--soluble or which incorporate at least the thiocyanate ion in solution. For example, the thiocyanate compounds used may be thiocyanic acid and the inorganic salts of thiocyanic acid, particularly the alkali metal or alkaline earth metal thiocyanates, namely, sodium, potassium, lithium, calcium and magnesium thiocyanates as well as ammonium thiocyanates. Other thiocyanate compounds which ionize in a brine solution or aqueous solution to produce thiocyanate ions can be utilized. Particularly preferred is ammonium thiocyanate. Mixtures of two or more of such thiocyanate compounds can, of course, be employed.

Thioureas are suitable for use in the present invention since, under certain conditions, for example at temperatures in excess of 300°F (150°C) or higher, they decompose to produce thiocyanate ions.

The thiourea compounds useful in the present invention to provide thiocyanate ions, for example, may be of the type represented by the formula

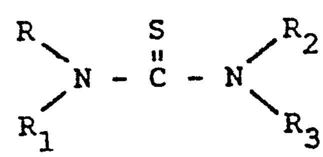

where R, $R_1$, $R_2$ and $R_3$ are each selected from the group consisting of hydrogen, and alkyl radicals containing from 1 to 4 carbon atoms such as methyl, ethyl, propyl, isopropyl, butyl and isobutyl.

Of the thiourea compounds, it is particularly preferred to utilize thiourea. Again, it will be understood that mixtures of two or more of

said thiourea compounds can be employed, as well as mixtures of the thiocyanate and thiourea compounds.

The combination of zinc compounds and thiocyanate compounds or thiourea compounds used should be compatible and provide some degree of corrosion protection.

Other known additives which will not affect the inhibiting effect of the corrosion inhibitor may be added to the corrosion-inhibiting composition of the present invention. For example, in oil well applications, viscosifiers such as hydroxyethylcellulose; flocculants such as polyacrylamide; fluid loss agents such as calcium carbonate; pH control chemicals such as lime; and other drilling aids such as lubricants, oils, emulsifiers, and $H_2S$ scavengers may be added to the composition.

In preparing a corrosion inhibiting composition of the present invention, the corrosion-inhibitor compound or compounds may be dissolved in the brine either directly or after dissolving the inhibitor in a solvent such as water. The resulting inhibited brine is then ready for use. For example, the inhibited brine may be used in drilling, completion, packer and workover applications.

An effective amount of corrosion inhibitor is added to the brine to reduce corrosion of

metal in contact with the brine from that which would occur with uninhibited brine of the same composition. The quantity of corrosion inhibitor added may vary and depends to some extent on the application conditions and the degree of corrosion protection desired.

Generally, the corrosion inhibitor, as $Zn(SCN)_2$, is present in the brine in a concentration ranging from 0.005 percent by weight to 5.0 percent by weight. Preferably, a range of 0.05 percent by weight to 1.0 percent by weight of $Zn(SCN)_2$ is employed. More preferable, a range of 0.1 percent to 0.5 percent by weight of $Zn(SCN)_2$ is employed.

If a combination of a zinc compound and a thiocyanate compound is employed as the corrosion inhibitor, the quantity of each compound used should be sufficient to provide a concentration of $Zn^{++}$ and $SCN^-$ ions substantially equivalent to that which would be provided by the compound of $Zn(SCN)_2$, alone, as described above. For example, if a combination of $NH_4SCN$ and $ZnBr_2$ is used as the inhibitor, 0.084 percent by weight of $NH_4SCN$ and 0.124 percent by weight $ZnBr_2$ would be required in the brine to achieve the equivalent of 0.1 percent by weight $Zn(SCN)_2$ in the brine. Greater quantities than 5.0 percent by weight of the inhibitor may be present in the brine but such quantities are not necessary to accomplish the purpose of the present invention. Furthermore, a specific molar concentration ratio of $Zn^{++}$ to $SCN^-$ can vary and still accomplish the purpose of the present invention.

The inhibited brine composition may be used at various temperatures and pressures. For example, if the inhibited brine is employed as well drilling, completion or workover fluid in oil and gas wells to reduce corrosion of metal in contact with the fluid, typically, the temperature of the fluid in use ranges from 100°F ( 38 °C) to 500°F (260°C). The composition of the present invention is especially useful at temperatures ranging from 150°F ( 65 °C) to 400°F ( 200 °C).

The following general corrosion test procedure was used to demonstrate experimentally the effectiveness of the corrosion-inhibiting composition of the present invention.

General Corrosion Test Procedure

A series of test solutions of uninhibited brine was vigorously mixed at 75°F ±5°F (23.9°C ± 2.8°C) with a corrosion inhibitor.

Coupons of Grade N-80 steel (American Petroleum Institute designations) were prepared by ultrasonic cleaning in acetone (coupons are stored with an oil coating) and then rinsing with clean acetone. The coupons were dried and then weighed.

The corrosion test on the coupons was done in a stainless steel aging cell, lined with a quartz container, using the test solutions. The coupons were placed in each of the solutions. With

the test solution and coupons in place, the cell was sealed and filled with nitrogen ($N_2$) to 150 psig (1034.21 kPa) $N_2$ pressure.

The aging cell was heated to a test temperature which constituted the start of the test. After the aging cell was heated for a test period, the heater was turned off and the aging cell allowed to cool to 80°F (26.7°C) to 100°F (37.8°C). The aging cell was then vented and opened. The coupons were transferred to inhibited 10 percent HCl solution and cleaned ultrasonically for two minutes. The coupons were then rinsed with water and then rinsed again with acetone. The coupons were weighed after drying. The rate of corrosion of each sample was calculated using the following equations:

$$\text{Corrosion rate in mils/year (mpy) [metre/year, m/y]} = \frac{\text{A x weight loss (g)}}{\text{Test length (days)}}$$

wherein A is a constant for a given coupon surface area.

The percent protection is calculated using the following equation:

$$\text{\% Protection} = \frac{\text{(CB-CTC) x 100}}{\text{CB}}$$

wherein CB = corrosion rate of blanks and CTC = corrosion rate of test coupons.

The examples which follow are given to illustrate the invention and should not be construed as limiting its scope. All parts and percentages are by weight unless otherwise indicated.

Example 1

The general corrosion test procedure above was used to corrosion test N-80 steel coupons with dimensions of 3/16 inch (0.47 cm) by 1 inch (2.5 cm) by 1/16 inch (0.16 cm) and an exposed surface area of about 0.5 square inch (3.23 $cm^2$). The test solutions used were a series of 15 milliliter (ml) test solutions of $CaCl_2$ brine having a density of 11.6 ppg (1390 $kg/m^3$, 38 percent $CaCl_2$ and 62 percent water) mixed with a corrosion inhibitor and their respective amounts as described in column (a) of Table I below.

The aging cell was heated to a test temperature of 400°F (204°C) for 7 days. The rate of corrosion of each sample was calculated using the following equation:

$$\text{Corrosion rate in mils/year (mpy) [metre/year, m/y]} = \frac{5672 \times \text{weight loss (g)}}{\text{Test length (days)}}$$

The results, described in Table I below, show that the $Zn(SCN)_2$ inhibitor gives a lower corrosion rate than other thiocyanate compounds with equivalent molar concentrations of thiocyanate ions. In addition, Table I shows that the $Zn(SCN)_2$ inhibitor gives an improved corrosion rate over a known film-forming amine inhibitor.

TABLE I

| Sample | (a) Inhibitor | Corrosion Rate (mpy) [m/y] | % Protection |
|---|---|---|---|
| CS A | none | 5.0 [$12.7 \times 10^{-5}$] | - |
| CS B | 0.1% $NH_4SCN$ | 11.7 [$29.72 \times 10^{-5}$] | 0* |
| CS C | 0.105% NaSCN | 11.8 [$29.97 \times 10^{-5}$] | 0* |
| CS D | 0.10% KI-86[(1)] | 3.0 [$7.62 \times 10^{-5}$] | 40 |
| 1 | 0.119% $Zn(SCN)_2$ | 1.2 [3.05 x 10-5] | 76 |

*These systems accelerated corrosion over that of the base brine.

CS = Comparative Sample

[(1)]KI-86 is a film-forming amine inhibitor which is a member of a class of inhibitors which contain salts of acetylated polyamines, quaternized amines and organic quaternanes in solvents such as methanol, isopropanol and water. KI-86 is commercially available from The Tretolite Company, a division of Petrolite Corp.

Example 2

The general corrosion test procedure above was used for testing coupons with dimensions of 1 9/16 inch (3.97 cm) by 1 inch (2.54 cm) by 3/16 inch (0.47 cm) with a 1/4 inch (0.63 cm) diameter hole and an exposed surface of about 4 square inches (25.8 $cm^2$). The test solutions used were a series of 150-ml solutions of 15.0 ppg (1797 $kg/m^3$) $CaCl_2$ and $CaBr_2$ brine mixture (43.6 percent $CaBr_2$, 17.1

percent $CaCl_2$ and 56.3 percent water) mixed with corrosion inhibitors and their respective amounts as described in column (a) of Table II below. The aging cell was heated at 300°F (149°C) for 5 days and 21 hours. The rate of corrosion of each sample was calculated using the following equation:

$$\text{Corrosion rate in mils/year (mpy) [metre/year, m/y]} = \frac{709 \times \text{weight loss (g)}}{\text{Test length (days)}}$$

Table II describes the synergistic effect of adding zinc ions to a thiocyanate-containing system. The inhibitor comprising a combination of a thiocyanate compound and zinc ions gives a lower corrosion rate than the thiocyanate compound alone.

TABLE II

| Sample | (a) Inhibitor | Corrosion Rate (mpy) [m/y] | % Protection |
|---|---|---|---|
| CS A | none | 15.2 [38.6 x $10^{-5}$ | - |
| CS B | 0.10% NaSCN | 8.4 [21.3 x $10^{-5}$] | 44.7 |
| 1 | 0.10% NaSCN + 0.01% $Zn^{++}$ | 7.2 [18.3 x $10^{-5}$] | 52.6 |
| 2 | 0.10% NaSCN + 0.025% $Zn^{++}$ | 2.3 [5.8 x $10^{-5}$] | 84.9 |

CS = Comparative Sample

Example 3

The general corrosion test procedure above was used for corrosion testing coupons with dimensions at 1 9/16 inch (3.97 cm) by 1 inch (2.54 cm) by 3/16 inch (0.47 cm) with a 1/4 inch (0.63 cm) diameter hole and an exposed surface area of about 4 square inches (25.8 $cm^2$). The test solutions used were a series of 150-ml solutions of $CaCl_2$ brine (38 percent $CaCl_2$ and 62 percent $H_2O$) having a density of 11.6 ppg (1390 $kg/m^3$). The corrosion inhibitor used was $Zn(SCN)_2$ and the amounts used are described in column (a) of Table III below. The aging cell was heated at 400°F (204°C) for 10 days and 17 hours. The rate of corrosion of each sample was calculated using the following equation:

$$\text{Corrosion rate in mils/year (mpy) [metre/year, m/y]} = \frac{709 \times \text{weight loss (g)}}{\text{Test length (days)}}$$

The results shown in Table III illustrate the effectiveness of a $Zn(SCN)_2$ inhibitor as a function of concentration.

TABLE III

| Sample | (a) Inhibitor | Corrosion Rate (mpy) [m/y] | % Protection |
|---|---|---|---|
| CS A | none | 8.5 [$21.59 \times 10^{-5}$] | - |
| 1 | 0.01% $Zn(SCN)_2$ | 8.4 [$21.34 \times 10^{-5}$] | 1.2 |
| 2 | 0.05% $Zn(SCN)_2$ | 3.3 [$8.38 \times 10^{-5}$] | 61.2 |
| 3 | 0.10% $Zn(SCN)_2$ | 0.2 [$0.51 \times 10^{-5}$] | 97.6 |

CS = Comparative Sample

Example 4

The general corrosion test procedure above was used for corrosion testing coupons with dimensions at 1 9/16 inch (3.97 cm) by 1 inch (2.54 cm) by 3/16 inch (0.47 cm). The test solutions used were a series of 150-ml solutions of $CaCl_2$ brine (38 percent $CaCl_2$ and 62 percent $H_2O$) having a density of 11.6 ppg (1390 kg/m³). The aging cell was heated at 400°F (204°C) for 5 days and 21 hours.

Table IV describes the synergistic effect of adding zinc ions to a thiocyanate-containing system. The inhibitor comprising a combination of a thiocyanate compound ($NH_4SCN$) and zinc ions gives a lower corrosion rate than the thiocyanate compound alone.

TABLE IV

| Sample | (a) Inhibitor | Corrosion Rate (mpy) [m/y] | % Protection |
|---|---|---|---|
| 1 | none | 19.0 [$48.3 \times 10^{-5}$] | - |
| 2 | 0.092% $NH_4SCN$ | 19.8 [$50.1 \times 10^{-5}$] | 0 |
| 3 | 0.92% $NH_4SCN$ +0.0036% $Zn^{++}$ (as $ZnBr_2$) | 5.1 [$12.9 \times 10^{-5}$] | 73.2 |

CLAIMS

1. A corrosion-inhibited composition characterized in that it comprises water, at least one alkali or alkaline earth metal halide, and a corrosion-inhibiting amount of zinc and thiocyanate ions.

2. The composition of Claim 1, characterized by having a density from 8 pounds per gallon (950 $kg/m^3$) to 16 pounds per gallon (1900 $kg/m^3$).

3. The composition of Claim 1, characterised in that the metal halide is $CaCl_2$, $CaBr_2$, $MgCl_2$, $MgBr_2$, NaCl, NaBr, KCl, KBr or mixtures thereof.

4. The composition of any one of Claims 1 to 3, characterized in that the zinc and thiocyanate ions are provided by zinc thiocyanate.

5. The composition of any one of Claims 1 to 3, characterized in that the zinc and thiocyanate are provided by a zinc compound and a thiocyanate compound.

6. The composition of Claim 5, characterized in that the zinc compound is a zinc halide.

7. The composition of Claim 6, characterized in that the zinc halide is zinc chloride, zinc bromide or a mixture thereof.

8. The composition of any one of Claims 5 to 7, characterized in that the thiocyanate compound is thiocyanic acid or an alkali metal or alkaline earth

metal salt thereof.

9. The composition of any one of Claims 5 to 7, characterized in that the thiocyanate compound is ammonium thiocyanate or sodium thiocyanate.

10. The composition of Claim 1 characterized in that the corrosion-inhibiting amount of zinc and thiocyanate ions is from 0.005 percent by weight to 5.0 percent by weight.

11. A method of making a corrosion-inhibited composition of Claim 1, which is characterized by combining a corrosion-inhibiting amount of a corrosion inhibitor which dissociates in solution to provide zinc and thiocyanate ions, with an aqueous fluid to provide a composition comprising water, an alkali or alkaline earth metal halide, zinc ions, and thiocyanate ions.

12. The method of Claim 11, characterized in that the composition has a density of 8 pounds per gallon (950 $kg/m^3$) to 16 pounds per gallon (1900 $kg/m^3$).

13. The method of Claim 12, characterized in that said metal halide is $CaCl_2$, $CaBr_2$, $MgCl_2$, $MgBr_2$, NaCl, NaBr, KCl, KBr or mixtures thereof; and said corrosion inhibitor is zinc thiocyanate or combination of zinc halide and thiocyanate compound.

14. The method of Claim 13 characterized in that said zinc halide is zinc chloride, zinc bromide or a

mixture thereof; and said thiocyanate compound is thiocyanic acid, an alkali metal thiocyanate, an alkaline earth metal thiocyanate or ammonium thiocyanate.

15. The method of Claim 14, characterized in that the corrosion-inhibiting amount of zinc and thiocyanate ions is from 0.005 percent by weight to 5.0 percent by weight.

16. A method of inhibiting corrosion of a metal, characterized in that the metal is contacted with a corrosion-inhibited composition as claimed in any one of Claims 1 to 10.

17. The method of Claim 16, characterised in that the metal is contacted with said corrosion-inhibited composition at a temperature from 100°F (38°C) to 500°F (260°C).

18. A method of decreasing the corrosiveness to a metal of a brine solution, which method comprises incorporating into the solution a corrosion inhibiting amount of a corrosioin inhibitor which dissolves in the solution to provide zinc and thiocyanate ions.